# EUROPEAN PATENT APPLICATION

(11) **EP 2 455 895 A1**
(43) Date of publication of application: **23.05.2012**
(21) Application number: 10191615.3
(22) Date of filing: 17.11.2010
(51) Int. Cl.: G06Q 10/00

(54) **A device for supporting a user in selecting clothes**

(71) Applicant: DNA Interactif Fashion, 8500 Kortrijk (BE)
(72) Inventor: Fijen, Huub, 8500 KORTRIJK (BE)
(74) Representative: Quintelier, Claude

(57) **Abstract**

A device for supporting a user in selecting clothes and/or other objects to wear, said device comprises scanning means provided for scanning the body of said user and generating a profile from said scanned body, said profile matching an overall dimension of said user, said device further comprising a database provided for storing a plurality of datasets, each dataset comprising data identifying a clothe respectively an object to wear, said device also comprises selection means connected to said database and provided for displaying said cloth respectively said object to wear, said selection means being further provided for enabling said user to select among said displayed clothes and objects, said selection means being connected to fitting means provided to dress said profile with said selected cloth and/or said selected object and for displaying the dressed profile.

## Description

Today there is a huge choice of products in the fashion industry. More than ever is making a choice extremely difficult because there is a great range of shops, brands and collections.

In the fashion supply chain there are large stocks and they are not efficient used or being offered. There is also a high percentage theft in the retail shops and a high degree of damage during the process that customers try on the clothes. Besides these problems in the supply chain there is also a relatively high quantity of staff per store. Good staff is difficult to find and to motivate. It is also difficult to maintain the knowledge level of this staff about all collections and last but not least, staff is expensive. All these issues lead to less efficiency, on both sides, on the side of the retailer and on the customer side.

Much can be said about "a shopping day", but in general there are a lot of negative points.

The crowds, lack of overview on the range and the stock, trying on, frustration (it's on stock in your size), etc. Sometimes the potential customer is ashamed because he/she has tried on so much. In some cases the customer even buys something that he/she not really wants.

Research shows that 50% of the purchased clothes are not worn, because at home the customer notices that he is not satisfied with his purchases. Making choices is difficult because during a "shopping day" many shops are visited. A piece is bought in store X, a piece at store Y and all this as to match to a piece Z at home. And once X, Y, and Z are united at home the styles don't belong together and/or the colors don't match.

The "shopping day" for the shops is also not optimal, because most of pieces tried on are not purchased. As a result a lot of work for the staff. Everything has to be folded again etc. Many zippers destroyed, there are cracks at the seams, etc. and 6% of the goods are lost through theft.

The present invention is based on two basic technologies (displays and 3D scanning). By using the device according to the present invention the customer can choose and try on, virtual, in 3dimensions, the clothes, the new hairstyle, the glasses and the accessories before he or she purchases the new item or style. This virtual 'trying on' replaces the sometimes unpleasant or awkward process of trying-on and viewing the clothing.

This approach not only provides extensive capabilities in the buying process, but also in the 'aftermarket'. Perfect example, all purchases of a customer are kept in a personal dressing and can be consulted during a new purchase. To answer the question : "Can this purchase be combined with some of my existing clothing".

Moreover, via for example email customers can be informed about a new collection and see how it will fit them by showing the new models on their virtual mannequin doll.

The use of the device according to the present invention offers the following advantages :

### Benefits for the consumers :

- Increased comfort for the customer during shopping
- The collection is better arranged
- The process of making a choice is more efficient (you can combine this from home)
- Choose from the available (no frustration that it is not in stock)
- Faster selection of products that you like (and to see their family)
- Advice from several experts (higher quality and professional insight)
- All within hand / mouse range
- A onetime log-on (and profile)
- In all iStyling shops, the customer service of a professional boutique (clothing and style advice) and the possibility to buy the products immediately.

### Benefits for the retailer

- Savings by hiring less shop space and less investment (by less needed square meters)
- Reduce heating and electricity consumption (better for the environment)
- The reduced staff is working with a customer about removing (stimulation sale)
- Better advice
- Better use of total offering
- Increased comfort for the customer
- More passage (pull of internet)
- Customers choose easier (gaining time)
- Reduce theft and damage to stock
- Stimulation accessories sales (higher margin)
- No costly waste of space for mannequin dolls.
- No clothing lost on mannequin dolls
- No time-consuming activity for redressing mannequin dolls.
- Automated stock management
- Responding to the new shopping needs of the customer

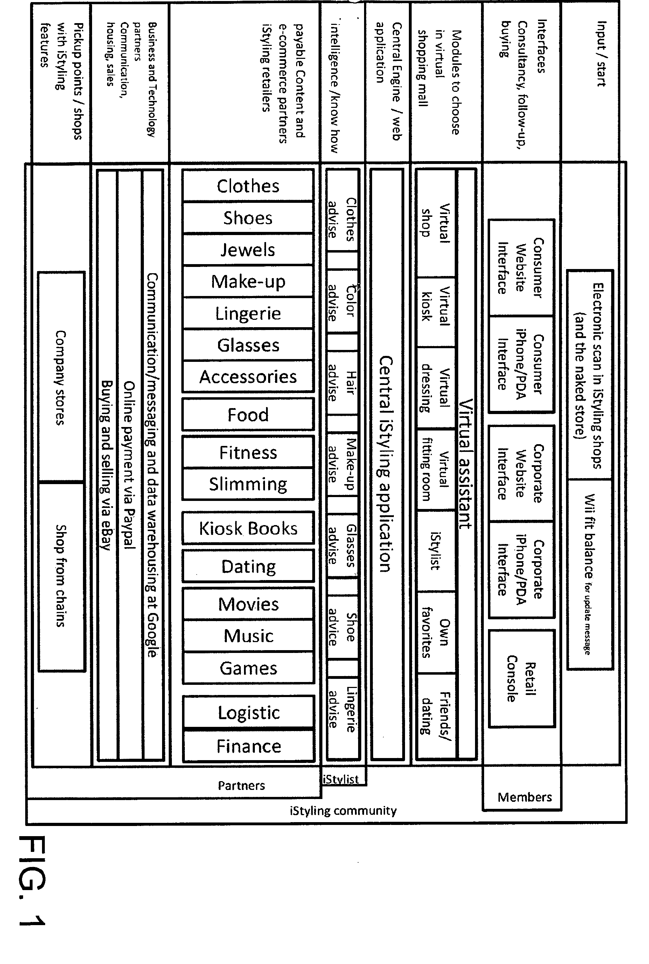

Figure 1 illustrates the different steps to be performed when using the device according to the present invention.

### Detailed description of the Invention

The present invention will now be described more fully hereinafter with references to the accompanying drawings, in which preferred embodiments of the invention are shown.

This inventions may, however, be embodied in many different forms and should not be construed as limited to the embodiments set forth herein.

There are several possibilities, according to the present invention, for creating a virtual mannequin. So the profile of the person could be measured by usual means such as a meter and manually loaded in a database. The profile could also be extracted from pictures provided by the person. Furthermore a 3D face pattern can be calculated starting from 2D pictures. Preferably however the profile is obtained by scanning the complete body of the person in order to obtain precise dimensions of the person and create a virtual mannequin which dimensions matches accurately with the real person.

Once the profile with the virtual mannequin has been created, the user will be guided to the different phases of the process.

### Phase 1

Advice is generated by a mathematic model.

Style advice for clothing is based on the ratios between shoulders, waist and hips.

Models which can be detected are:
- H-type
- X-type
- A-type
- Y-type
- O-type

The process then continuous by extracting the needed measuring of the body. Here we look at the relationship between the sizes of the considered person. The figures have less importance. The relationship between the shoulder circumference, waist circumference and hip circumference to determine what type of character the person belongs to. Does your body mainly curves, you are probably an A-type, 8-type or O type. A body with straight lines is more likely a Y-type H-type or X-type.

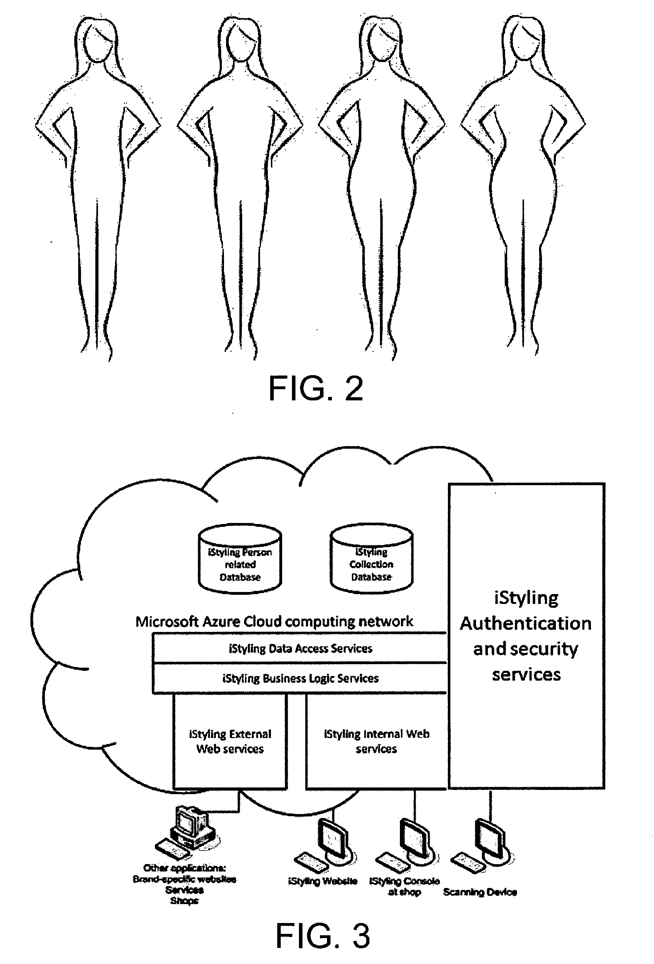

Figure 2 shows a set of mannequin silhouettes among which a user can select.

Also it is looked at the shape of your face. There are seven face shapes: oval, oblong rectangular, triangular, square, round, heart-shaped (inverted triangle) or diamond-shaped.

The circumference of the wrist and just tell something about your bone structure. When for example selecting jewelry and accessories, you have to make sure that they are proportional to your bone structure.

The program examine the results of the measurements and gives tips on matching clothing, jewelry, hair, makeup and glasses frames.

Colors are advised based on a questionnaire which the user has to answer.

So we know he or she is a spring, summer, autumn and winter type.

### Phase II

Fitting can be done in the virtual fitting room. Clothes are show on the avatar of the customer created with the profile.

### Phase III

Products selected can be moved to a shopping basket.

Figure 3 illustrates schematically the device according to the invention

Figure 4 shows the environment in which the device of the present invention can operate.

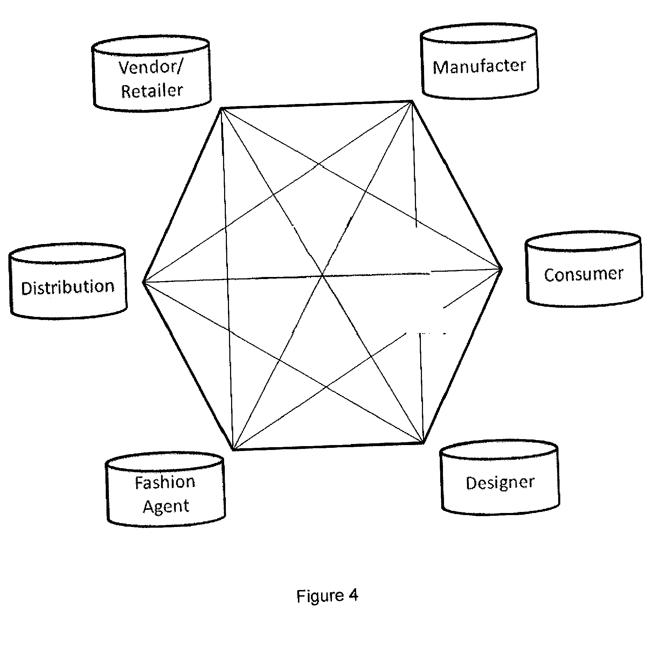

With the environment of figure 4 an open communication and feedback is created.

All parties are linked to each other and they can interact with each other and get the needed feedback.

Initially an individual visits a business (e.g., a clothing retailer) location having a body measurement system configured to measure the surface contour of the body of the individual and generate a three-dimensional digital dataset refined to hereinafter as "body scan data."

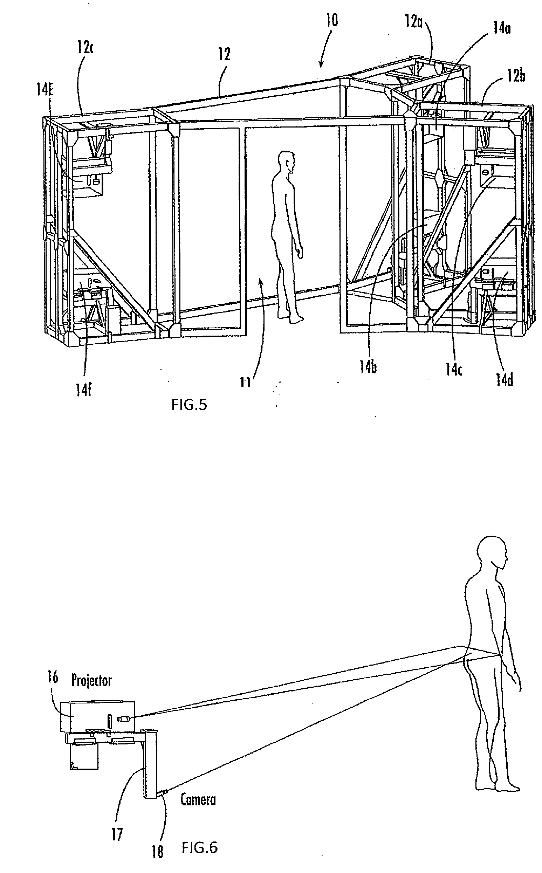

An exemplary body measurement system, according to the invention is illustrated in FIGS. 5. The system includes a scanning chamber 11, a series of six sensors 14a, 14b, 14c, 14d, 14e, 14f, and a controller (not shown).

The illustrated scamming chamber 11 includes a generally Y-shaped frame 12. The frame has two forward compartments 12a, 12b that are located in the "arms" of the "Y', and a rear compartment 12c located in the 'tail" of the 'Y". The sensors 14a, 14b are mounted in the forward compartment 12a, the sensors 14c, 14d are mounted in the forward
compartment 12b, and the sensors 14e, 14f are mounted in the rear compartment 12c.

Each sensor includes a projector 16 and a camera (e.g., a charge coupled device (CCD)) 18 mounted on a frame 17 as illustrated in figure 6.

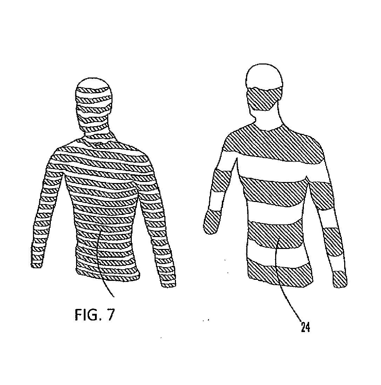

Each camera 18 detects the projected pattern on the occupant and provides a signal corresponding to the image to a controller 20. Each projector 16 includes one or more gratings (not shown), the image of which can be projected onto an occupant of the chamber 11. For example, a fine grating (e.g., 1 mm at the grating) can be used to produce a fine grating pattern 22 on the occupant as illustrated in figure 7.

A coarse grating (e.g., 5 mm at the grating) can be used to produce a coarse grating pattern 24 on the occupant (see FIG. 7). In either instance, the grating pattern varies in intensity sinusoidally in the vertical direction and is invariant in the horizontal direction.

Each projector 16 and camera 18 are mounted rigidly on a frame 17, which in turn is mounted in the frame 12, with each camera 18 being mounted below a respective projector 16. In this configuration, each camera 18 and projector 16 are separated by a baseline and thus form a triangulation with the occupant (see FIG. 6) that enables the distance to the projected image to be calculated.

Referring back to FIG. 5, the sensor 14a is mounted directly above the sensor 14b in the forward compartment 12b; similarly, the sensor 14c is mounted above the sensor 14d in the forward compartment 12b and the sensor 14e is mounted above the sensor 14f in the rear compartment 12c. In this arrangement, an upper and lower image can be obtained from each compartment to achieve total height coverage.

All of the sensors 14a-14f are operatively connected to a controller that typically includes a motion control card and frame grabber circuit boards. The controller is connected to both the projector 16 (to control the timing of projection) and to the camera 18 (to retrieve image data gathered by the camera 18) of each of the sensors 14a-14f. The controller includes software that is configured to perform the following functions: providing a graphical user interface; controlling the data acquisition sequence; acquiring and storing image buffers; processing acquired images; calculating the resulting data points; displaying graphical output; and generating digital body scan data for an individual.

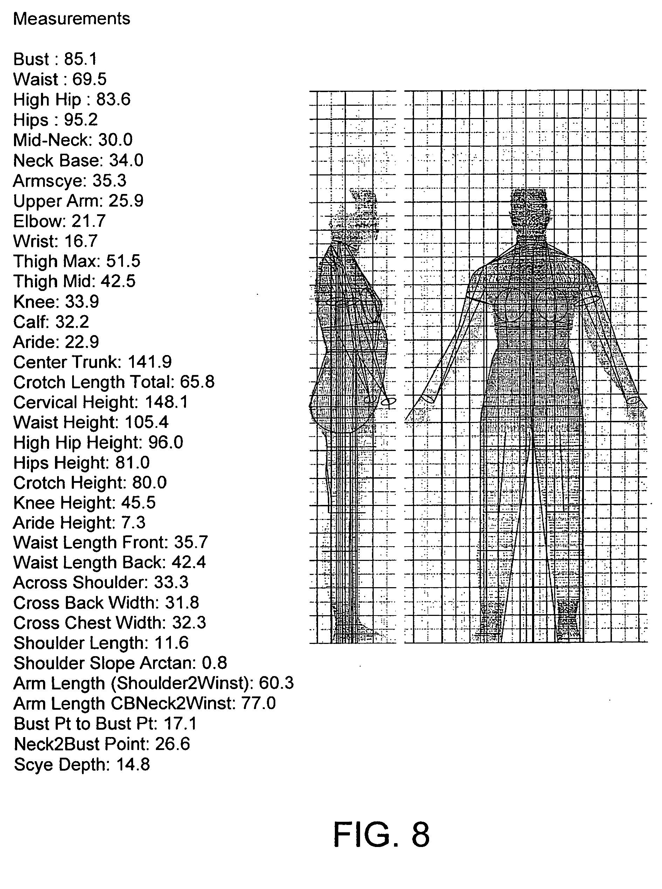

According to some embodiments of the present invention, the body scan data generated by a body measurement system for an individual may optionally be stored or maintained at the location of the body measurement system or by the owner of the body measurement system provided that they have the authorization of the customer. Figure 8 shows an example of the made measurements. A copy of the body scan data is transferred to the individual, preferably within a predefined time period, such as, for example, 30 minutes. The data can also be stored on a personal storage media e.g., floppy disk CD-ROM, DVD, tape, or a USB key which are hand over to the customer. The body scan data can always be emailed to the individual.

In addition, the body scan data can be encrypted to ensure privacy. As will be described below, an intermediary retains a decryption key for all sets of body scan data generated by body measurement systems manufactured or sold or leased by the intermediary. However, the intermediary does not physically possess or have access to the body scan data of any individual, unless they themselves provide products/services directly to the customers, and the individual customers specifically send the body scans data to them in order to receive that product or service, or if the individual specifically authorize the intermediary to retain the data along with rich identification information.

Once the bodymodels have been created, the programmes recognizes arms, legs, body, neck etc.

To have a personalized face we create separate a 3d model from the face of the individual based on 1 or 2 pictures. So we have a 3D human faces from 1 or 2 photographs or at random, plus when wanted with adjusted age, race, gender the faces are applied to the polygonal mesh.

3D computer graphics (in contrast to 2D computer graphics) are graphics that use a three-dimensional representation of geometric data (often Cartesian) that is stored in the computer for the purposes of performing calculations and rendering 2D images. Such images may be stored for viewing later or displayed in real-time.

Despite these differences, 3D computer graphics rely on many of the same algorithms as 2D computer vector graphics in the wire-frame model and 2D computer raster graphics in the final rendered display. In computer graphics software, the distinction between 2D and 3D is occasionally blurred; 2D applications may use 3D techniques to achieve effects such as lighting, and 3D may use 2D rendering techniques. In our case we use those same algorithms from the 2d and convert them into 3D computer graphics

3D computer graphics are often referred to as 3D models. Apart from the rendered graphic, the model is contained within the graphical data file. However, there are differences. A 3D model is the mathematical representation of any three-dimensional object. A model can be displayed visually as a two-dimensional image through a process called 3D rendering, or used in non-graphical computer simulations and calculations.

The present invention combines the data scan measurements and the 3d face. The texture on the body is a multiple from the texture taken from the face.

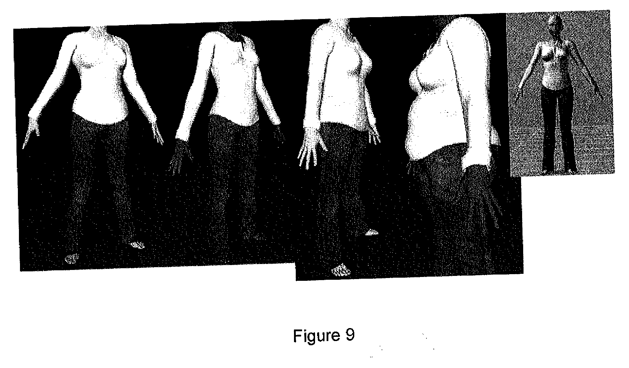

For dressing the avatar, hanging points and a mesh were used to morph the clothes with the avatar. Point on the scan are identified and also on the piece of garment. And the points on the piece of garment are morphed to these of the scan, as illustrated in figure 9.

Morphing is a special effect that changes (or morphs) one image into another through a seamless transition. Most often it is used to depict one person turning into another through technological means or as part of a fantasy or surreal sequence.

Morphing involves distorting one image at the same time that it faded into another through marking corresponding points and vectors on the "before" and "after" images used in the morph. For example, one would morph one face into another by marking key points on the first face, such as the contour of the nose or location of an eye, and mark where these same points existed on the second face. The computer would then distort the first face to have the shape of the second face at the same time that it faded the two faces.

According to the present invention the morphing algorithm automatically morph images that correspond closely enough with relatively little instruction from the user.

The markers are crucial in the file with the body model of the person who is scanned and the hanging point are created in the 3d clothes files.

The algorithm in this case attempts to find corresponding points between the scanned person and markers in the pieces of garment and distort one into the other as they cross fade.

In order to provide the user a virtual catwalk, animation is provided. To this purpose an animation based on a flip book technology is used.

A flip book or flick book is a book with a series of pictures that vary gradually from one page to the next, so that when the pages are turned rapidly, the pictures appear to animate by simulating motion or some other change. Flip books are often illustrated books for children, but may also be geared towards adults and employ a series of photographs rather than drawings. Flip books are not always separate books, but may appear as an added feature in ordinary books or magazines, often in the page corners. Software packages and websites are also available that convert digital video files into custom-made flip books.

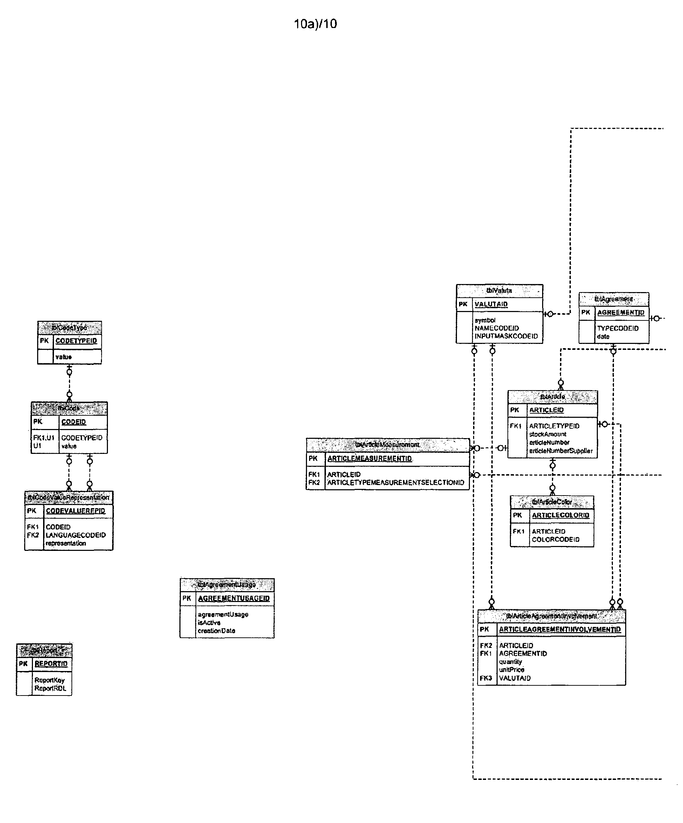

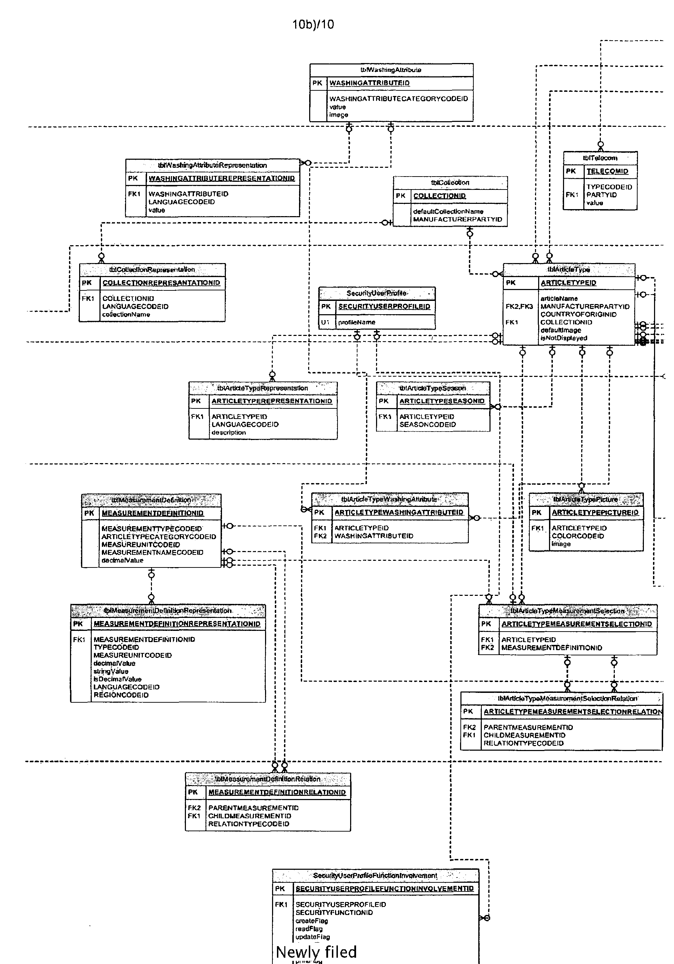

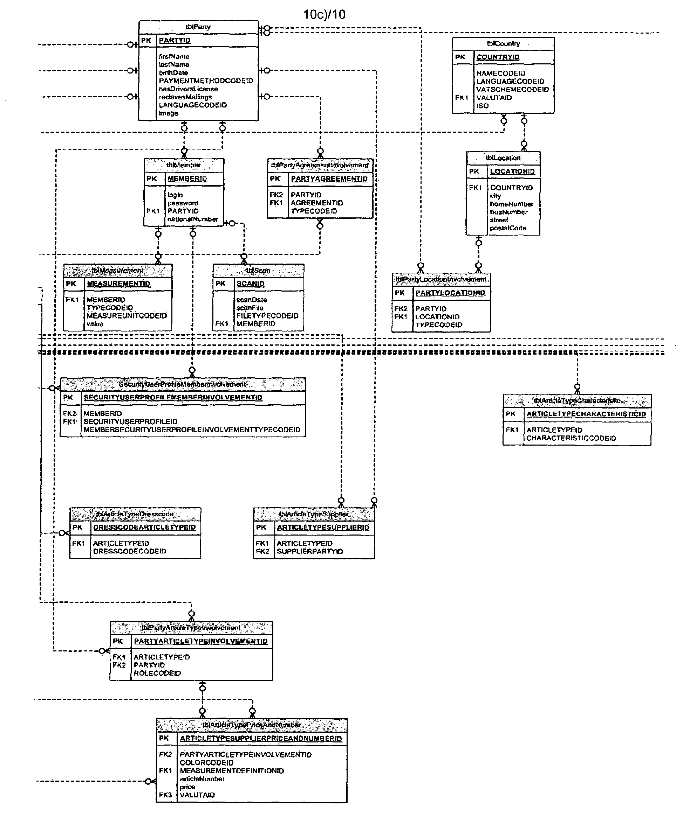

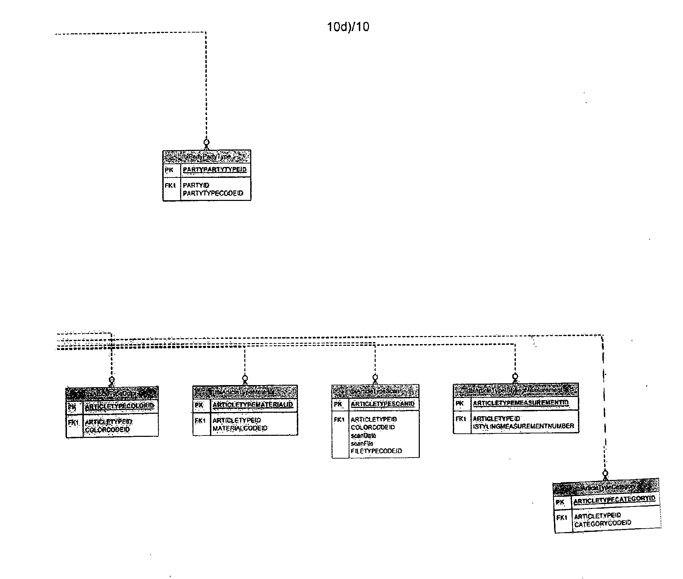

The present invention also uses cloud computing, which is a Web-based processing, whereby shared resources, software, and information are provided to computers and other devices (such as smart phones) on demand over the Internet. Figure 10 illustrates the concept of cloud computing.

Cloud computing is a paradigm shift following the shift from mainframe to client-server in the early 1980s. Details are abstracted from the users, who no longer have need for expertise in, or control over, the technology infrastructure "in the cloud" that supports them. Cloud computing describes a new supplement, consumption, and delivery model for IT services based on the Internet, and it typically involves over-the-Internet provision of dynamically scalable and often virtualized resources. It is a byproduct and consequence of the ease-of-access to remote computing sites provided by the Internet. This frequently takes the form of web-based tools or applications that users can access and use through a web browser as if it was a program installed locally on their own computer. NIST provides a somewhat more objective and specific definition here. The term "cloud" is used as a metaphor for the Internet, based on the cloud drawing used in the past to represent the telephone network, and later to depict the Internet in computer network diagrams as an abstraction of the underlying infrastructure it represents.

Typical cloud computing providers deliver common business applications online that are accessed from another Web service or software like a Web browser, while the software and data are stored on servers.

Most cloud computing infrastructures consist of services delivered through common centers and built on servers. Clouds often appear as single points of access for consumers' computing needs. Commercial offerings are generally expected to meet quality of service (QoS) requirements of customers, and typically include service level agreements (SLAs). The major cloud service providers include Sales force, Amazon and Google. Some of the larger IT firms that are actively involved in cloud computing are Fujitsu, Microsoft, Hewlett Packard, IBM, VMware and Dell.

Generally, cloud computing customers do not own the physical infrastructure, instead avoiding capital expenditure by renting usage from a third-party provider. They consume resources as a service and pay only for resources that they use. Many cloud-computing offerings employ the utility computing model, which is analogous to how traditional utility services (such as electricity) are consumed, whereas others bill on a subscription basis. Sharing "perishable and intangible" computing power among multiple tenants can improve utilization rates, as servers are not unnecessarily left idle (which can reduce costs significantly while increasing the speed of application development). A side-effect of this approach is that overall computer usage rises dramatically, as customers do not have to engineer for peak load limits. In addition, "increased highspeed bandwidth" makes it possible to receive the same.

Cloud computing users avoid capital expenditure (CapEx) on hardware, software, and services when they pay a provider only for what they use. Consumption is usually billed on a utility (resources consumed, like electricity) or subscription (time-based, like a newspaper) basis with little or no upfront cost. Other benefits of this approach are low barriers to entry, shared infrastructure and costs, low management overhead, and immediate access to a broad range of applications. In general, users can terminate the contract at any time (thereby avoiding return on investment risk and uncertainty), and the services are often covered by service level agreements (SLAs) with financial penalties.

Cloud computing sample architecture Cloud architecture, the systems architecture of the software systems involved in the delivery of cloud computing, typically involves multiple cloud components communicating with each other over application programming interfaces, usually web services. This resembles the UNIX philosophy of having multiple programs each doing one thing well and working together over universal interfaces. Complexity is controlled and the resulting systems are more manageable than their monolithic counterparts.

The two most significant components of cloud computing architecture are known as the front end and the back end. The front end is the part seen by the client, i.e. the computer user. This includes the client's network (or computer) and the applications used to access the cloud via a user interface such as a web browser. The back end of the cloud computing architecture is the 'cloud' itself, comprising various computers, servers and data storage devices.

A cloud client consists of computer hardware and/or computer software that relies on cloud computing for application delivery, or that is specifically designed for delivery of cloud services and that, in either case, is essentially useless without it. Examples include some computers, phones and other devices, operating systems and browsers.

Cloud application services or "Software as a Service (SaaS)" deliver software as a service over the Internet, eliminating the need to install and run the application on the customer's own computers and simplifying maintenance and support. People tend to use the terms 'SaaS' and 'cloud' interchangeably, when in fact they are 2 different things.

Network-based access to, and management of, commercially available (i.e., not custom) software Activities that are managed from central locations rather than at each customer's site, enabling customers to access applications remotely via the Web Application delivery that typically is closer to a one-to-many model (single instance, multi-tenant architecture) than to a one-to-one model, including architecture, pricing, partnering, and management characteristics Centralized feature updating, which obviates the need for downloadable patches and upgrades.

Cloud platform services or "Platform as a Service (PaaS)" deliver a computing platform and/or solution stack as a service, often consuming cloud infrastructure and sustaining cloud applications. It facilitates deployment of applications without the cost and complexity of buying and managing the underlying hardware and software layers.

Cloud infrastructure services, also known as "Infrastructure as a Service (laaS)", delivers computer infrastructure - typically a platform virtualization environment - as a service.

Rather than purchasing servers, software, data-center space or network equipment, clients instead buy those resources as a fully outsourced service.

Suppliers typically bill such services on a utility computing basis and amount of resources consumed (and therefore the cost) will typically reflect the level of activity laaS evolved from virtual private server offerings.

The server's layer consists of computer hardware and/or computer software products that are specifically designed for the delivery of cloud services, including multi-core processors, cloud-specific operating systems and combined offerings.

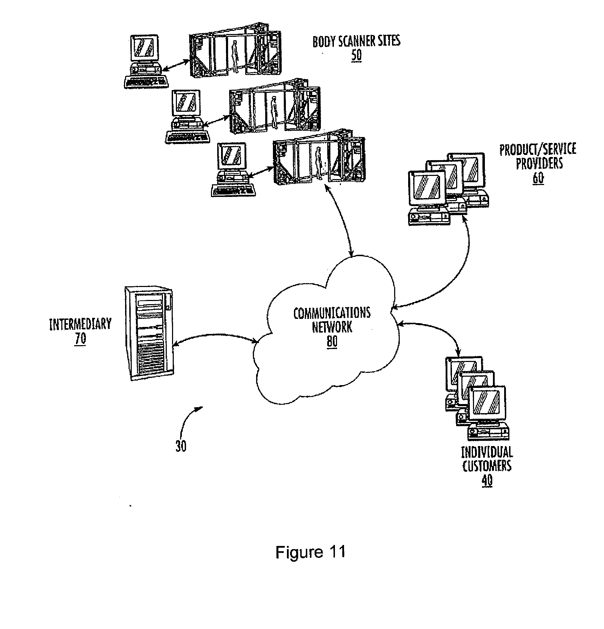

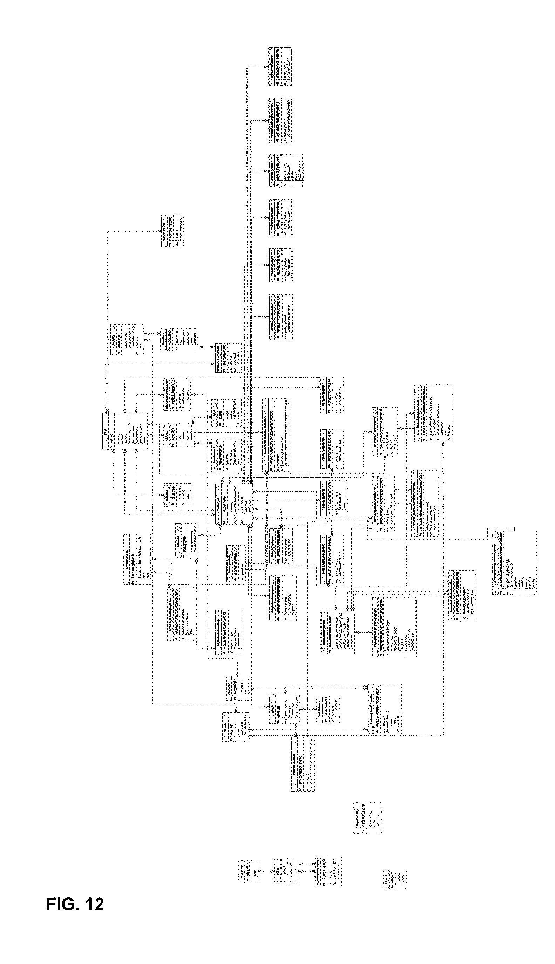

Figure 11 illustrates the body scanner sites of the present invention as part of a communication network. Figure 12 illustrates the database structure used in the present invention.

The data sharing network 30 is designed to increase the use and selling in the fashion retail based on virtual avatars created by our body scanner or other body measurement systems sold by others.

The data sharing network 30 is designed to collaborate with the retailers. This platform enables the end-user to make a good selection on the web and in this way this tool gives a great pull effect of customers to his store. The network may also be linked to social networks enable end-users to get help or share their info from friends and family.

The illustrated data sharing network 30 includes a plurality of individual customers 40, a plurality of stores having our body scanner or other body measurement systems 50, a plurality of product service providers 60 (stylists, fashions consultants), and intermediary web sites 70. The center is communications network 80, based on cloud computing in internet. (Microsoft Azure network)

As used herein, the term "customer" refers to an individual who has obtained body scan data for herself or himself and who uses this body scan data to purchase various goods and/or services. The term "product/service provider" refers to any provider of products and/or services that a customer may obtain with the body scan data of the customer.

As is known to those skilled in this art, the internet is a worldwide decentralized network of computers having the ability to communicate with each other. The World-Wide

Web (web) is comprised of server-hosting computers (web servers) connected to the internet that have hypertext documents (referred to as web pages) stored there within. Web pages are accessible by client programs, referred to as "web clients". (e.g., web browsers) utilizing the Hypertext Transfer Protocol (HTTP) via a Transmission Control Protocol

Internet Protocol (TCP/IP) connection between a client hosting device and a server hosting device. While HTTP and web pages are the prevalent forms for the web, the web itself refers to a wide range of protocols including Secure Hypertext Transfer Protocol (HTTPS) and File Transfer Protocol (FTP), and web content formats including plain text, Hyper-

Text Markup Language (HTML), Extensible Markup Language (XML), as well as image formats such as Graphics interchange Format (GIF) and Joint Photographic Experts Group (JPEG).

A web site is conventionally a related collection of web files that includes a beginning file called a "home" page. From the home page, a visitor can access other files and applications at a web site. A large web site may utilize a number of servers, which may or may not be different and which may or may not be geographically-dispersed. The term "web site", as used herein, shall include FTP sites.

HTTP allows a browser to request a specific item, which a web server then returns and the browser renders. To ensure that browsers and web servers can interoperate unambiguously HTTP defines the exact format of requests (HTTP requests) sent from a browser to a web server as well as the format of responses (HTTP responses) that a web server returns to a browser. Exemplary browsers that can be utilized with embodiments of the present invention include, but are not limited to, Mozilla Firefox (The Mozilla Foundation, Mountain View, Calif.) and Internet Explorer (Microsoft Corporation, Redmond, Wash.). Browsers typically provide a graphical user interface for retrieving and viewing web pages, applications, and other resources served by web sewers.

As is known to those skilled in this art, a web page is conventionally formatted via a standard page description language such as HTML, which typically contains text and can reference graphics, sound, animation, and video data. HTML provides for basic document formatting and allows a web content provider to specify anchors or hypertext links (typically manifested as highlighted text) to other servers. When a user selects a particular hypertext link, a browser running on the user's client device reads and interprets an address, called a Uniform Resource Locator (URL) associated with the link, connects the browse; with a web server at that address, and makes a request (e.g., an HTTP request) for the file identified in the link. The web server then sends the requested file to the client device which the browser interprets and renders within a display screen.

According to embodiments of the present invention, an individual customer 40 who has already received his/her body scan data from the body measurement system of a third party body scanner site 50 accesses the intermediary web site 70 in search of product/service providers 60 who utilize body scan data in providing products and services. For example, a customer may be interested in various clothing retailers that will utilize body scan data for the customer to prepare custom-tailored clothing.

A new generation of mirrors based on a screen with an interactive system on it can also be provided. This gives users the following options: Select Wear, Compare and Share.
Select: preview of yourself with some new 2D and 3D outfits (without physically fitting)
Wear: fitting outfits selected
Compare: Digital photos of appropriate outfits and return on interactive mirror sites to compare and decide.
Share: ability to check e-mail to send!

Interactif Mirror interfacing is based on software technology and range camera technology which interprets 3D scene information from a continuously-projected infrared pattern.

The Interactif Mirror sensor is a horizontal bar connected to a small base with a motorized pivot, and is designed to be positioned lengthwise above or below the video display. The device features an "RGB camera, depth sensor and multi-array microphone running proprietary software", which provides full-body 3D motion capture, facial recognition, and voice recognition capabilities.

The Interactif Mirror sensor's microphone array enables the mirror to conduct acoustic source localization and ambient noise suppression, allowing for things such as headset-free party chat over the Interactif Mirror.

The depth sensor consists of an infrared projector combined with a monochrome CMOS sensor, and allows the sensor to see in 3D under any ambient light conditions. The sensing range of the depth sensor is adjustable, with the software capable of automatically calibrating the sensor based on fitting room and the player's physical environment, such as the presence of furniture.

The software technology enables advanced gesture recognition, facial recognition, and voice recognition. The sensor is capable of simultaneously tracking up to six people, including two active players for motion analysis with a feature extraction of 20 joints per user.

The sensor outputs video at a frame rate of 30 Hz, with the RGB video stream at 32-bit color VGA resolution (640x480 pixels), and the monochrome video stream used for depth sensing at 16-bit QVGA resolution (320x240 pixels with 65,536 levels of sensitivity). The sensor has a practical ranging limit of 1.2-3.5 meters (3.9-11 ft) distance. The sensor has an angular field of view of 57° horizontally and a 43° vertically, while the motorized pivot is capable of tilting the sensor as much as 27° either up or down. The microphone array features four microphone capsules, and operates with each channel processing 16-bit audio at a sampling rate of 16 kHz.

Our facial recognition system is a computer application for automatically identifying or verifying a person from a digital image or a video frame from a video source. One of the ways to do this is by comparing selected facial features from the image and a facial database.

Some facial recognition algorithms identify faces by extracting landmarks, or features, from an image of the subject's face. For example, an algorithm may analyze the relative position, size, and/or shape of the eyes, nose, cheekbones, and jaw. These features are then used to search for other images with matching features. Other algorithms normalize a gallery of face images and then compress the face data, only saving the data in the image that is useful for face detection. A probe image is then compared with the face data. One of the earliest successful systems is based on template matching techniques applied to a set of salient facial features, providing a sort of compressed face representation.

Recognition algorithms can be divided into two main approaches, geometric, which look at distinguishing features, or photometric, which is a statistical approach that distills an image into values and comparing the values with templates to eliminate variances.

Popular recognition algorithms include Principal Component Analysis with Eigen face, Linear Discriminate Analysis, Elastic Bunch Graph Matching fisherface, the Hidden Markov model, and the neuronal motivated dynamic link matching.

The present device offers a three-dimensional face recognition. This technique uses 3-D sensors to capture information about the shape of a face. This information is then used to identify distinctive features on the surface of a face, such as the contour of the eye sockets, nose, and chin.

One advantage of 3-D facial recognition is that it is not affected by changes in lighting like other techniques. It can also identify a face from a range of viewing angles, including a profile view.

With the present algorithm we recognize the face of the user and his body. Standard body models we morph to a body model the user will recognize. Morphing is a special effect in that changes (or morphs) one image into another through a seamless transition.

On this morphed body we project clothes of the store. So the user sees him self in the clothes of the store he is visiting.

Morphing is a special effect in that changes (or morphs) one image into another through a seamless transition.

To have a garment we create a 3d model from the apparel based on 2 pictures. One front and one photo from the back.

3D computer graphics (in contrast to 2D computer graphics) are graphics that use a three-dimensional representation of geometric data that is stored in the computer for the purposes of performing calculations and rendering 2D images. Such images may be stored for viewing later or displayed in real-time.

Despite these differences, 3D computer graphics rely on many of the same algorithms as 2D computer vector graphics in the wire-frame model and 2D computer raster graphics in the final rendered display. In computer graphics software, the distinction between 2D and 3D is occasionally blurred; 2D applications may use 3D techniques to achieve effects such as lighting, and 3D may use 2D rendering techniques. In our case we use those same algorithms from the 2d and convert them into 3D computer graphics

3D computer graphics are often referred to as 3D models. Apart from the rendered graphic, the model is contained within the graphical data file. However, there are differences. A 3D model is the mathematical representation of any three-dimensional object. A model can be displayed visually as a two-dimensional image through a process called 3D rendering, or used in non-graphical computer simulations and calculations.

Video is the technology of electronically capturing, recording, processing, storing, transmitting, and reconstructing a sequence of still images representing scenes in motion.

Here we use recorded scenes and play 6 different parts in a synchronized way on this screens. The synchronization happens per frame. So the whole delivers ons video for the user. But the content can be distributed to several (2-300) locations globally over the internet.

## Claims

1. A device for supporting a user in selecting clothes and/or other objects to wear, said device comprises scanning means provided for scanning the body of said user and generating a profile from said scanned body, said profile matching an overall dimension of said user, said device further comprising a database provided for storing a plurality of datasets, each dataset comprising data identifying a clothe respectively an object to wear, said device also comprises selection means connected to said database and provided for displaying said clothe respectively said object to wear, said selection means being further provided for enabling said user to select among said displayed clothes and objects, said selection means being connected to fitting means provided to dress said profile with said selected cloth and/or said selected object and for displaying the dressed profile.

2. The device according to claim 1, wherein said scanning means are provided for scanning said body in three dimensions and for generating said profile in three dimensions.

3. The device according to claim 1 or 2, wherein said fitting means are further provided to animate said dressed profile in such a manner as to display said dressed profile as a walking mannequin.

4. The device as claimed in any of the claims 1 to 3, wherein said dataset comprises parameters relating to stretch values of the cloth, said fitting means being provided for determining based on said stretch values and said profile a tension induced in said cloth when dressed on said profile and for displaying said tension.
